# EUROPEAN PATENT SPECIFICATION

(11) **EP 1 049 367 B1**
(45) Date of publication and mention of the grant of the patent: **10.03.2004**
(21) Application number: 99958411.3
(22) Date of filing: 25.11.1999
(51) Int. Cl.: A01D 45/02

(54) **SNAPPING ROLL UNIT FOR A MAIZE HEADER**
PFLÜCKWALZENEINHEIT FÜR MAISPFLÜCKER
ELEMENT A ROULEAUX DE COUPE POUR BEC CUEILLEUR A MAIS

(30) Priority: 25.11.1998 HU 9802723; 16.09.1999 HU 9903132
(43) Date of publication of application: 08.11.2000
(73) Proprietor: Linamar Hungary Autoipari és Gépgyarto Részvénytarsasag, 5900 Oroshaza (HU)
(72) Inventor: BORSOS, István, H-5900 Orosháza (HU); KOMLOSI, Mihály, H-5900 Orosháza (HU); PROZLIK, István, H-5900 Orosháza (HU); BARANYI, János, H-5900 Orosháza (HU)
(74) Representative: Kovacs, Gabor
(86) International application number: PCT/HU1999/000086
(87) International publication number: WO 2000/030427

(56) References cited:
- EP-A- 0 369 440
- FR-A- 1 367 255
- FR-A- 2 453 595
- US-A- 2 103 002
- US-A- 2 634 731
- US-A- 5 161 356
- US-A- 5 787 696

## Description

### Technical field

The subject of the invention is a snapping roll unit for maize header, or more precisely a new system maize header, with the snapping units comprising of two snapping rolls with different rotational speeds and rotating in opposite directions and having the task of simultaneously cutting and crushing maize stalks while performing completely their conventional functions fulfilled in corn head snapping.

### Background art

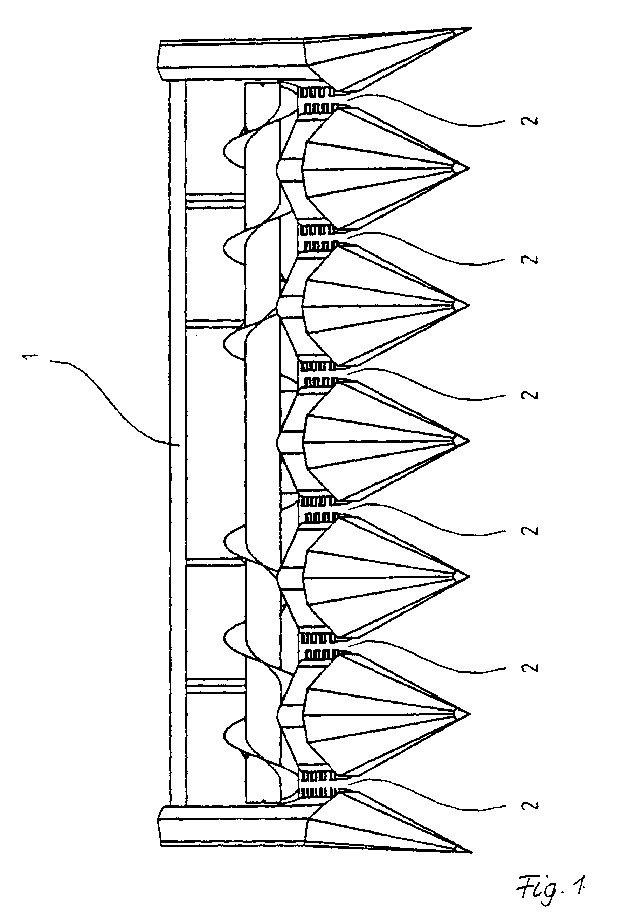

Figure 1 shows the location of the snapping rolls 2 on the traditional maize header 1. The number of snapping rolls 2 depends on the configuration and width of the maize header 1. The maize header advances in the stand so that each snapping roll unit 2 harvests one row of maize.

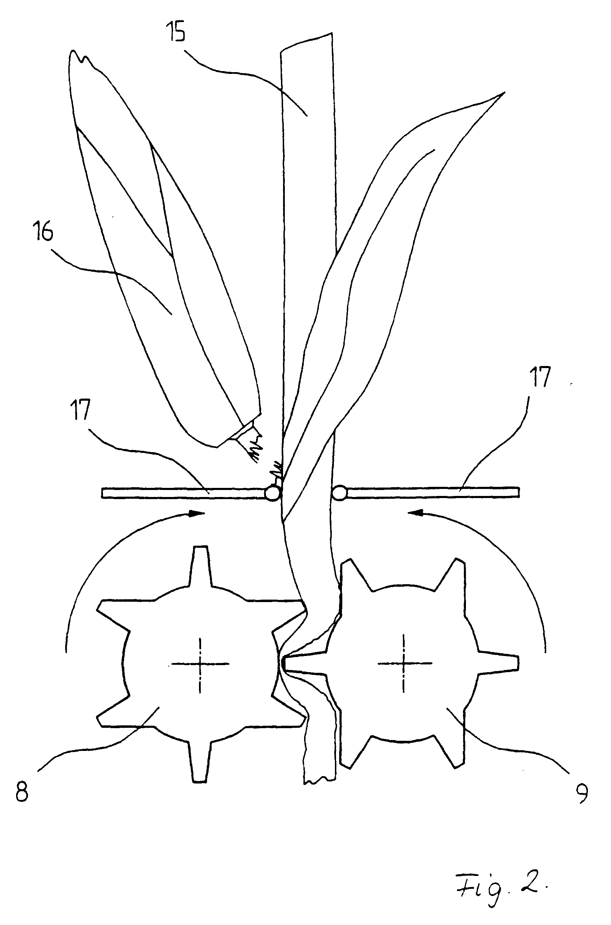

Figure 2 shows the structure and snapping function of a traditional snapping roll unit 2. The snapping roll unit 2 comprises of two interlocking snapping rolls 8, 9 rotating in opposite directions along two parallel axes, achieved in general by way of two gearwheels with identical number of teeth. Located above the snapping rolls 8, 9 there are snapping plates 17 extending parallel to the axis of their rotation. The snapping rolls have axial ribs, which engage each other altematingly during rotation, however, without colliding to each other.

The maize stalk 15 getting between the snapping rolls 8, 9 are pulled downwards by the snapping rolls 8, 9 and passes through a slot between the snapping plates 17. Meanwhile the cobs 16 arriving at and caught by the snapping plate 17 breaks free of the maize stalk 15.The maize stalk 15 then gets under the snapping roll unit 2.

In maize headers I of traditional configuration the separation (freeing) of the cobs the maize stalks 15 are also crashed simultaneously but the breaking and crashing procedures are not closely connected. In such structures maize stalks 15 getting under the snapping roll unit 2 is chopped and cut by a separately driven device. This results in a more complex design and more expensive manufacture.

The snapping roll unit utilized by the headers of the German CLAAS machine factory provides a more sophisticated solution than that described above, wherein the snapping rolls force the maize stalks onto fix counterblade performing this way the stalk chopping within the snapping unit.

An other German company, GeringhofF developed a snapping roll unit operating with a single snapping roll which combs the stalks through a fix row of blades to ensure chopping this way. Another solution of the Geringhoff Company is a three-roll unit wherein two snapping rolls strip the stalk and the third has a role in stalk chopping.

FR-A-1367255 discloses a snapping roll unit comprising two, a first and a second snapping roll rotating in opposite directions around parallel axes and being rotationally interlocked with each other, and longitudinal snapping plates located over said snapping rolls and extending parallel to said axes of rotation. The teeth of the blades on the first row being co-operationally engageable with grooves of the blades of the second row. This co-operation, however, does not result in reliable of the maize stalks.

### Disclosure of the invention

The aim of the invention is to improve the well-known snapping roll unit so that the maize stalk is reliably stripped and simultaneously chopped and crushed during harvesting.

An addition aim of the invention is furthermore to configure the snapping roll unit so that this operation is reliable with the smallest possible risk of blockage.

A further aim of the invention is to configure the snapping roll unit so that it can be adjusted to the quality of the harvested produce.

Still further the aim of the invention is to configure the snapping roll unit for good maintenance so that its maintenance is easy.

According to the invention a snapping roll unit was designed in the manner defined by appended claim 1. Thus the snapping rolls beside completely fulfilling their tasks of cob snapping function simultaneously the chopping and crushing of the stalks is effected too.

According to a preferred embodiment of the snapping roll unit according to the invention the number of blades located on the first snapping roll is higher than the number of blades located on the second snapping roll and the interlocked transmission (forced or positive coupling) between the snapping rolls is selected to set the rotational speeds of the snapping rolls be the reciprocal of the number of blades on the respective snapping rolls. Thus the second snapping roll will rotate at a faster speed aiding the crashing process and the removal of any dirt.

The number of blades depends naturally on the dimensions of the snapping rolls and the required size of the stalk cuts. For the advantageous design of the snapping roll unit according to the invention the number of blades located at the first snapping roll is at least four. The use of fewer blades will result in unreliable grabbing and stripping of the stalks. Suitably the number of blades located on the first snapping roll is the double of the number of blades on the second napping roll, and the rotational speed of the second snapping roll drive is the double of the rotational speed of the first snapping roll. It is even better if the number of blades on the first snapping roll is six; the number of blades on the second snapping roll is three. Width of the teeth on the toothed blades is between 7 and 40 mm, preferably in the range of 13-19 mm. In case of smaller tooth widths manufacturing becomes more difficult, mechanical strength is reduced, the energy required for chopping is increased. In case of larger widths the probability of insufficient stalk chopping increases.

The width of the grooves of the toothed blade should exceed by at least 0.2 mm and at most 5 mm, but preferably by at least 1 mm and at most 1.6 mm the width of the teeth. This dimension determines the clearance between the side edges of adjacent teeth and affects the clipping performed by the blades. In case of dryer produce larger clearance size can be chosen, as the dry stalks tend to break more easily. If this clearance is too small the side edges of the teeth are too close increasing the danger of abrasive wear and principally the danger of damages caused by any hard dirt particles getting between the blades.

In a further advantageous embodiment of the snapping roll unit according to the invention at least the distance of the blades located on the second snapping roll in relation to the rotation axis is adjustable. This allows the adjustment of the relative position of the blades that might be needed to compensate manufacturing tolerances or after regrinding necessitated by abrasion wear. Adjustment can be easily achieved if the blades on the second snapping roll point forward in respect of the direction of rotation, and are adjustable in that direction. This solution at the same time helps in the removal of dirt and stalk residues.

### Brief description of the drawings

The invention, its additional features, advantages and objectives achieved through the invention is described in detail with reference to the exemplary embodiment shown in the attached drawings.
- Figure 1: shows a the arrangement of a well known snapping roll unit on a maize header
- Figure 2: shows a schematic cross section of a conventional snapping roll unit demonstrating its snapping function
- Figures 3A-3H: show subsequent positions of a snapping roll unit according to for a maize header, which positions demonstrate snapping and crushing functions,
- Figure 4: shows a possible design of the maize header with the snapping roll unit according to the invention, upper view of a partial cross,
- Figure 5: shows possible design of the blades to be mounted onto the snapping rolls

### Description of the preferred embodiment of the invention

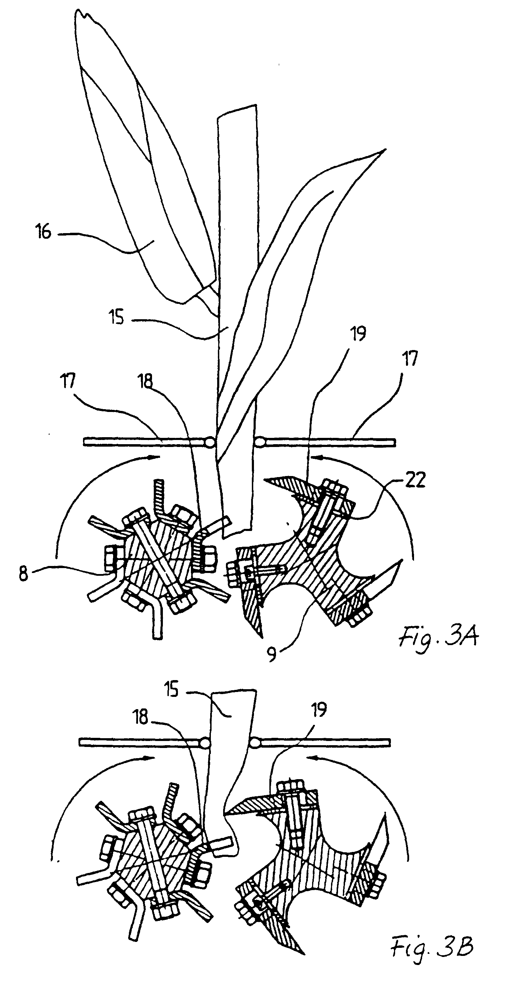

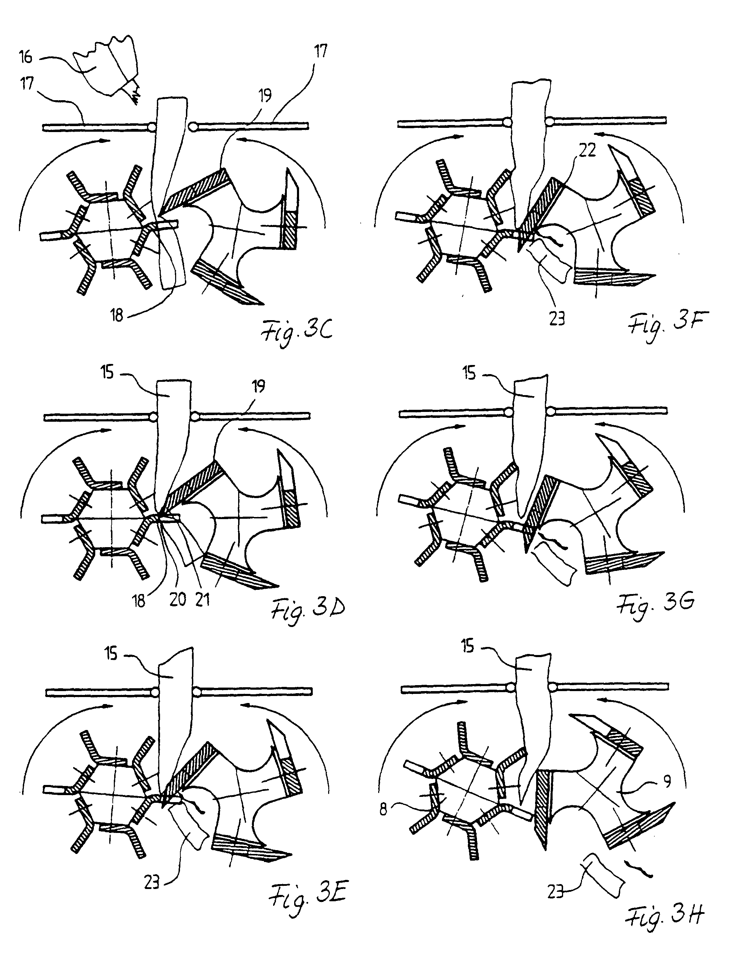

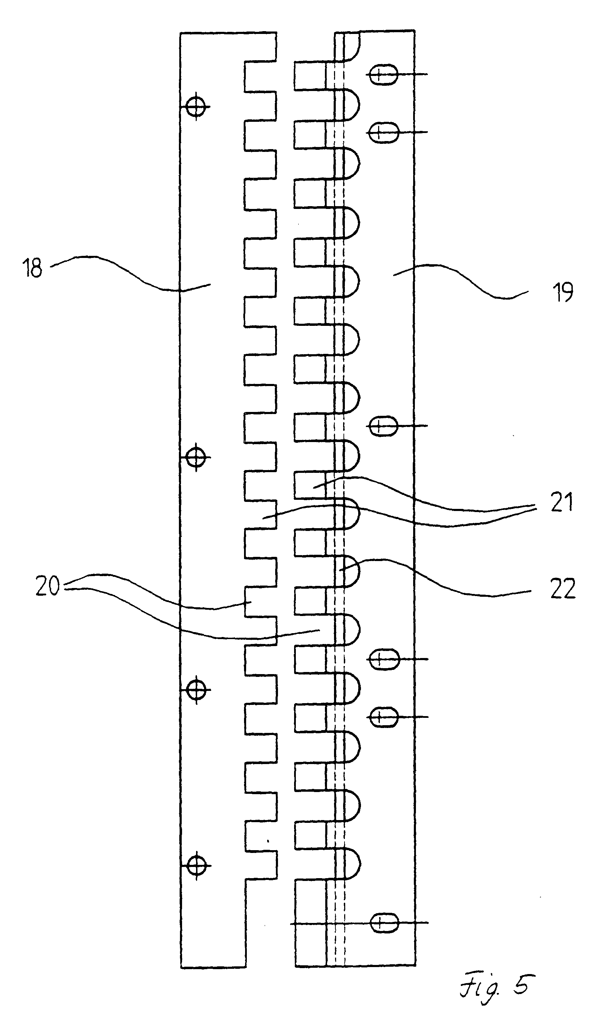

The comparison of Figure 3A with Figure 2 shows clearly the new design of the snapping roll unit 2 and the differences from the previous design. Instead of axial ribs or bars there are toothed blades 18, 19 arranged on snapping rolls 8, 9. In the present embodiment there are six toothed blades 18 arranged on snapping roll 8 and three toothed blades 19 on snapping roll 9 with all blades extending parallel to the axis of rotation. Snapping rolls 8, 9 rotate in the direction indicated by the arrows, in opposite to each other, having a transmission of 1:2 between them, that is snapping roll 9 rotates with double the speed of snapping roll 8. The preferred connection of the drives should be solved with gearwheels and this way the position of snapping rolls 8 and 9 in respect to each other is defined in all angular positions. This angular position is such that during rotation the blades meet approximately at (and in the proximity of) the plane defined by the two axes of rotation. Both toothed blades 18 and 19 are formed with teeth (see Figure 5) and in the angular region of their meting the teeth of toothed blade 18 engage the grooves of toothed blade 19 and vice versa. Figures 3A-3H A show the relative angular positions and the subsequent stages of the cutting performed by snapping rolls 8 and 9 and the toothed blades 18 and 19 mounted on them.

Figures 3 A-3H to be described in details later demonstrate the design and operation of the positively coupled first and second snapping rolls 8,9 located in the snapping roll unit 2 of maize header 1 configured according to the invention and rotating in opposite directions and with different rotational speeds and while performing completely the function of snapping they are also crushing the maize stalk 15 simultaneously.

Toothed blades 18 are mounted on snapping roll 8 and toothed blades 19 are mounted on snapping roll 9. Rotating snapping rolls 8,9 in opposite direction results that the teeth 21 and grooves 20 of the toothed blades 18, 19 - shown separately on figure 5 - get in interdigitated relationship.

In the preferred embodiment presented the rotational speed of the snapping roll 9 is twice that of snapping roll 8, on which double number of toothed blades 18 is mounted. This way it is possible to ensure that the toothed blades 18 on snapping roll 8 form a tooth-groove engagement with their counterparts on snapping roll 9. A straight blade 22 having a cleaning function is located under toothed blade 19.

In operation the counter-revolution of snapping rolls toothed blades 8, 9 approach each other to such an extent that a cutting slot (gap or clearance) is formed in the groove of toothed blades 18, 19 and due to the difference of their angular speed resulting from the appropriately chosen rotational speeds an incision is formed on the maize stalk 15 which results in a severance of the stalk 15.

In the state presented on Figure 3A the maize stalk a 15 gets between snapping rolls 8, 9 aligned with the slot between snapping plates 17. As during operation snapping rolls 8,9 rotate with different rotational speeds in opposite directions toothed blades 18, 19 move towards each other and thereby grip the stalk 15.

The maize stalk 15 that on Figure 3 A between snapping rolls 8, 9 gripped by toothed blades 18, 19 on further revolution of snapping rolls 8, 9 gets into the position shown in Figure 3B. Figure 3B shows the stage when toothed blade 19 forces a cross sectional part of maize stalk 15 into the groove 20 of toothed blade 18. The width of the teeth 21 and grooves 20 of toothed blades 18, 19 advantageously chosen in such a way that the maize stalk 15 is not able to get into the groove 20 of toothed blade 18 with its full cross section. As a result, the maize stalk 15 breaks lengthwise with a part of its cross section getting into the groove 20 of toothed blade 18 and another part into the groove 20 of toothed blade 19. And thus the crushing of the maize stalk 15 starts.

Figure 3C shows an angular position wherein the edge of toothed blade 19 begins to cut into the maize stalk. Toothed blades 18, 19 flatten the maize stalk 15, and thus are able to exercise a stripping force. The strength of this stripping effect is such that it is just able to break off the maize cob 16 from the stalk 15 stuck on snapping plate 17, but the stalk itself does not break between toothed blades 18, 19 at that moment yet. It is this way that the snapping function is performed. In this position snapping rolls 8, 9 are able to exercise significant pulling force, suitable to safely break the maize cobs 16 from the stalks.

Figure 3D shows a position where a tooth of toothed blade 19 is completely interlocked with the groove of toothed blade 18. Jointly, toothed blades 18, 19 at the place of interlocking practically cut through the full cross section of the stalk 15. Figure 3E shows the progress of the revolution wherein the chipping or crushing 23 falls off the stalk 15. The detachment of the chipping, if necessary, is completed by a supplementary shearing action shown in 3F and performed by the top edge of the teeth of toothed blade 21 and the edge of the straight blade 22 during the subsequent stages of the operation wherein the straight blade 22 passes over the top of tooth 21 of saw toothed blade 18, reliving it from the stringy or deposited crushing 23. Details 3G, 3H show the crushing 23 moving away from the snapping rolls 8, 9 and maize stalk 15 getting into a position where the next pair of toothed blades 18, 19 can start a next stripping and crushing operation.

On the basis of the operation described above the two snapping rolls 8, 9 built into the snapping roll unit of the maize header 1 according to the invention, beside performing in full its task in the cob snapping function, performs simultaneously the cutting and crushing of the maize stall 15 as well. Thus, the use of an additional crushing device is not necessary. With this solution the problems resulting from the use of stationary blades by other devices can be avoided, and the structural design and manufacturing of the machine can be significantly simplified.

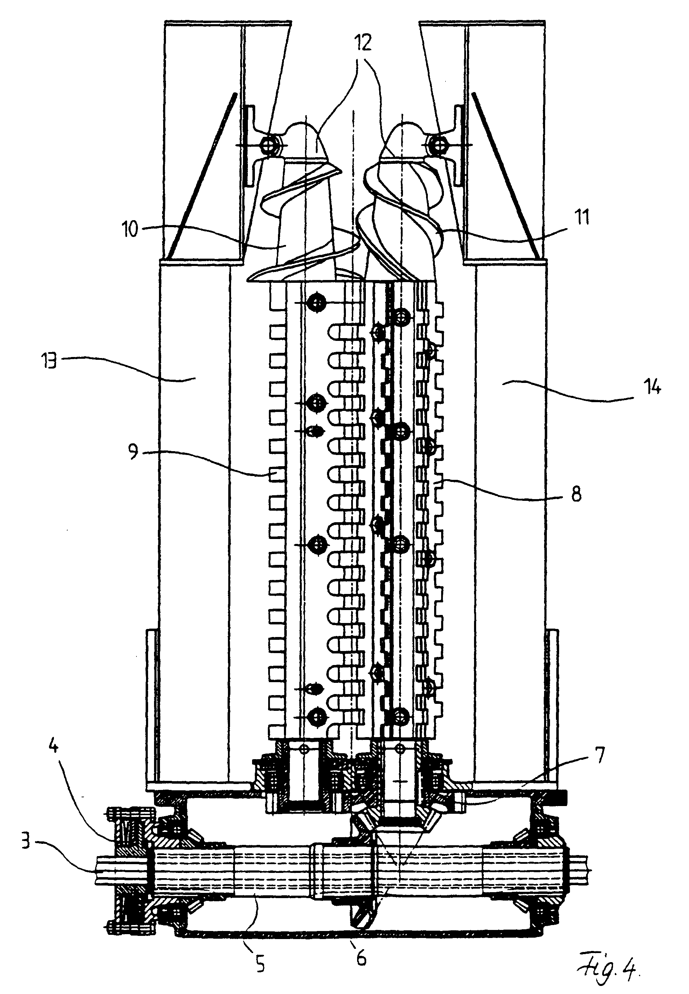

Figure 4 shows a possible design of snapping roll unit 2. This embodiment of the maize header 1 has a hollow drive shaft 3 connected to a safety switch 4 mounted on the shaft 3, which is connected to a spur gear drive 7 through an angle drive 6. Snapping rolls 8, 9 are connected to the spur gear drive 7. At the end of snapping rolls 8, 9 gathering worms 10, 11 are located which are supported by bearings 12. Bearings 12 are held by frames 13, 14 of snapping roll unit 2.

During operation the driving shaft 3 of maize header 1 said safety switch 4 and said hollow shaft 4, which transfers drive to said spur gear drive 7 through angular drive 6. Said spur gear drive 7 rotates said snapping rolls 8, 9 in oppositely with different rotational speeds, wherein the gathering worms 10, 11 located at their end direct the maize stalk 15 onto the snapping rolls 8, 9, which cause the snapping of the maize cob and also the crushing and cutting of the stalk 15.

To ensure safer cutting the teeth of at least one of the toothed blades 19 located on the snapping roll 9, are displaced by e.g. one-third pitch. This way the stalks 15 are more securely gripped, pulled in and crushed by subsequent tooth and groove pairs.

Crushing 23 is prepared as a result of the crushing and cutting process described above.

Returning to Figure 3A it can b seen that the toothed blades 19 are mounted on snapping roll 9 in a position pointing forward in relation to the direction of rotation. The toothed blades 19 are fixed with the aid of bolts to planar surfaces of projections formed on said snapping roll 9. Straight blades 22 are located under the toothed blades 19 and their width is selected to have the straight blade extend partially into the groove 20 between the teeth 21 of the toothed blade 19. Both the teeth 21 of the toothed blade 19 and the edge of the straight blade 22 are sharpened to ensure good quality cutting through their co-operation with the teeth 21 and groove 20 of toothed blade 18.

During use from time to time the sharpening of the toothed blade 19 and the straight blade 22 may become necessary. To perform this operation both toothed blade 19 and straight blade 22 can be dismounted from the snapping roll 9 and can be mounted again following the sharpening. The change in dimension caused by the sharpening can be adjusted as the openings for fixing are formed to have an oval shape. When mounting snapping rolls 8, 9 must be turned to an angular position that places the teeth 21 of the toothed blade 18 as close as possible to the straight blade 22. In this position, the position of straight blade 22 relative to toothed blade 18 can be temporarily adjusted and fixed by two bolts. Subsequently, the snapping rolls 8,9 have to be turned in a position where the teeth 21 of tooth blade 19 are placed as close as possible to the bottom of grooves 20 of tooth blade 18. In this angular position the position of tooth baled 18 relative to toothed blade 19 can be adjusted. Than toothed blade 19 can be fixed with the aid of further bolts and this fixation will also fasten both straight blade 22 and toothed blade 19 in their final position.

Usually, it is not necessary to sharpen the toothed blades 18 of snapping roll 8, however, in case of excessive abrasive wear they can simply be replaced.

In general it is not necessary to adjust the position of toothed blades 18, 19 and straight blade 22 to the quality of the harvested produce. The broad preferred ranges defined above can in general be used for harvesting most types of maize. If however, the result of the harvest requires, the necessary adjustments can be made within the given ranges.

## Claims

1. A snapping roll unit for a maize header comprising two, a first and a second snapping roll rotating in opposite directions around parallel axes and being rotationally interlocked with each other, and longitudinal snapping plates located over said snapping rolls and extending parallel to said axes of rotation, onto said snapping rolls (8, 9) toothed blades (18, 19) are mounted, said blades are formed to have teeth and grooves, **characterised in that** the teeth of the blades (18) on the first snapping roll (8) are engageable with grooves of said blades (19) on said second snapping roll (9) in an interdigitated fashion.

2. The snapping roll unit as claimed in claim 1, wherein the number (a1) of blades (18) on the first snapping roll (8) being larger than the number (a2) of blades (19) on the second snapping roll (9), and the transmission ratio between the interlocked snapping rolls (8, 9) is such, that the rate (n1:n1) of the rotational speeds (n1, n2) is the reciprocal (a2:a1=n1:n2) of the ratio of the number of blades (18, 19) on the respective snapping rolls (8, 9).

3. The snapping roll unit as claimed in claims 1 or 2, wherein the number (a1) of blades (18) on the first snapping roll (8) being at least 4.

4. The snapping roll unit as claimed in claim 2, wherein the number (a1) of blades (18) on the first snapping roll (8) being the double of the number (a2) of blades (19) on the second snapping roll (9) and the rotational speed (n2) of the second snapping roll (9) being the double of the rotational speed (n1) of the first snapping roll (8).

5. The snapping roll unit as claimed in claim 4, wherein the number (a1) of the blades (18) on the first snapping roll (8) being six, and the number (a2) of blades (19) on the second snapping roll (19) being three.

6. The snapping roll units as claimed in any of claims 1-5, wherein the width of the teeth (21) of the on the toothed blades (21) being between 7 mm and 40 mm, preferably in the range between 13 mm and 19 mm.

7. The snapping roll unit as claimed in claim 1, wherein the width of the grooves (22) of the toothed blades (18, 19) being at least 0.2 mm but preferably 0.5 mm larger than the width of the teeth (21).

8. The snapping roll unit as claimed in claim 7, wherein the width of the grooves (22) of the toothed blades (18, 19) being at least 1 mm but preferably 1.6 mm larger than the width of the teeth (21).

9. The snapping roll unit as claimed in claim 1, wherein the distance of each blade (19) mounted onto the second snapping roll (9) relative to the axis of rotation being adjustable.

10. The snapping roll unit as claimed in claim 1, wherein the blades on the second snapping roll (9) being pointing forward in respect of the direction of rotation.

## Patentansprüche

1. Brechwalzeneinheit für ein Maiserntevorsatzgerät, welche zwei, eine erste und eine zweite, Brechwalzen, die sich in entgegengesetzter Richtung um parallele Achsen drehen und drehbar miteinander zwangsverbunden sind, sowie längsgerichtete Brechplatten aufweist, welche über den Brechwalzen angeordnet sind und sich zu den Rotationsachsen parallel erstrecken, auf den Brechwalzen (8, 9) gezahnte Messer (18, 19) montiert sind, wobei die Messer so geformt sind, dass sie Zähne und Kerben aufweisen, **dadurch gekennzeichnet, dass** die Zähne der Messer (18) auf der ersten Brechwalze (8) mit den Kerben der Messer (19) auf der zweiten Brechwalze (9) miteinander in Eingriff gebracht werden können.

2. Brechwalzeneinheit nach Anspruch 1, worin die Anzahl (a1) der Messer (18) auf der ersten Brechwalze (8) größer als die Anzahl (a2) der Messer (19) auf der zweiten Brechwalze (9) ist und das Übersetzungsverhältnis zwischen den in Zwangsverbindung stehenden Brechwalzen (8, 9) so ausgewählt ist, dass das Verhältnis (n1:n1) der Rotationsgeschwindigkeiten (n1, n2) zu dem Verhältnis der Anzahl der Messer (18, 19) auf den entsprechenden Brechwalzen (8) (a2:a1 = n1:n2) reziprok ist.

3. Brechwalzeneinheit nach Anspruch 1 oder 2, worin die Anzahl (a1) der Messer (18) auf der ersten Brechwalze (8) mindestens vier beträgt.

4. Brechwalzeneinheit nach Anspruch 2, worin die Anzahl (a1) der Messer (18) auf der ersten Brechwalze (8) das Doppelte der Anzahl (a2) der auf der zweiten Brechwalze (8) befindlichen Messer (19) beträgt und die Rotationsgeschwindigkeit (n2) der zweiten Brechwalze (9) das Doppelte der Rotationsgeschwindigkeit (n1) der ersten Brechwalze (8) beträgt.

5. Brechwalzeneinheit nach Anspruch 4, worin die Anzahl (a1) der Messer (18) auf der ersten Brechwalze (8) sechs und die Anzahl (a2) der Messer (19) auf der zweiten Brechwalze (19) drei beträgt.

6. Brechwalzeneinheit nach einem der Ansprüche 1 bis 5, worin die Breite der Zähne (21) auf den gezahnten Messern (21) zwischen 7 mm und 40 mm, vorzugsweise in dem Bereich von 13 mm und 19 mm liegt.

7. Brechwalzeneinheit nach Anspruch 1, worin die Breite der Kerben (22) der gezahnten Messer (18, 19) um mindestens 0,2 mm, jedoch vorzugsweise 0,5 mm größer als die Breite der Zähne (21) ist.

8. Brechwalzeneinheit nach Anspruch 7, worin die Breite der Kerben (22) der gezahnten Messer (18, 19) um mindestens 1 mm, jedoch vorzugsweise 1,6 mm größer als die Breite der Zähne (21) ist.

9. Brechwalzeneinheit nach Anspruch 1, worin der Abstand jeden auf die zweite Brechwalze (9) montierten Messers (19) von der Drehachse einstellbar ist.

10. Brechwalzeneinheit nach Anspruch 1, worin die Messer auf der zweiten Brechwalze (9) bezüglich der Rotationsrichtung nach vorn weisen.

## Revendications

1. Unité à rouleaux épanouilleurs pour table de coupe à maïs comprenant deux, un premier et un second, rouleaux épanouilleurs tournant dans des directions opposées autour d'axes parallèles et étant accouplés rotationnellement l'un avec l'autre, et des plaques séparatrices longitudinales situées au-dessus desdits rouleaux épanouilleurs et s'étendant parallèlement auxdits axes de rotation, sur lesdits rouleaux épanouilleurs (8, 9) des lames dentées (18, 19) sont montées, lesdites lames sont formées pour avoir des dents et des rainures, **caractérisée en ce que** les dents des lames (18) sur le premier rouleau épanouilleur (8) peuvent entrer en prise avec des rainures desdites lames (19) sur ledit second rouleau épanouilleur (9) d'une manière interdigitée.

2. Unité à rouleaux épanouilleurs selon la revendication 1, dans laquelle le nombre (a1) de lames (18) sur le premier rouleau épanouilleur .(8) est supérieur au nombre (a2) de lames (19) sur le second rouleau épanouilleur (9), et le rapport de transmission entre les rouleaux épanouilleurs accouplés (8, 9) est tel que la cadence (n1:n1) des vitesses de rotation (n1, n2) est l'inverse (a2:a1=n1:n2) du rapport du nombre de lames (18, 19) sur les rouleaux épanouilleurs respectifs (8, 9).

3. Unité à rouleaux épanouilleurs selon les revendications 1 ou 2, dans laquelle le nombre (a1) de lames (18) sur le premier rouleau épanouilleur (8) est au moins de 4.

4. Unité à rouleaux épanouilleurs selon la revendication 2, dans laquelle le nombre (a1) de lames (18) sur le premier rouleau épanouilleur (8) est le double du nombre (a2) de lames (19) sur le second rouleau épanouilleur (9) et la vitesse de rotation (n2) du second rouleau épanouilleur (9) est le double de la vitesse de rotation (n1) du premier rouleau épanouilleur (8).

5. Unité à rouleaux épanouilleurs selon la revendication 4, dans laquelle le nombre (a1) de lames (18) sur le premier rouleau épanouilleur (8) est de six, et le nombre (a2) de lames sur le second rouleau épanouilleur (19) est de trois.

6. Unité à rouleaux épanouilleurs selon l'une quelconque des revendications 1-5, dans laquelle la largeur des dents (21) des lames dentées (18, 19) est entre 7 mm et 40 mm, de préférence dans la gamme entre 13 mm et 19 mm.

7. Unité à rouleaux épanouilleurs selon la revendication 1, dans laquelle la largeur des rainures (22) des lames dentées (18, 19) est au moins de 0,2 mm, mais de préférence 0,5 mm supérieure à la largeur des dents (21).

8. Unité à rouleaux épanouilleurs selon la revendication 7, dans laquelle la largeur des rainures (22) des lames dentées (18, 19) est au moins de 1 mm, mais de préférence 1,6 mm supérieure à la largeur des dents (21).

9. Unité à rouleaux épanouilleurs selon la revendication 1, dans laquelle la distance de chaque lame (19) montée sur le second rouleau épanouilleur (9) par rapport à l'axe de rotation est réglable.

10. Unité à rouleaux épanouilleurs selon la revendication 1, dans laquelle les lames sur le second rouleau épanouilleur (9) sont pointées vers l'avant par rapport au sens de rotation.
